# EUROPÄISCHE PATENTSCHRIFT

(11) **EP 2 145 928 B1**
(45) Veröffentlichungstag und Bekanntmachung des Hinweises auf die Patenterteilung: **13.09.2017**
(21) Anmeldenummer: 08160711.1
(22) Anmeldetag: 18.07.2008
(51) Int. Cl.: C09C 1/30, C09D 7/12, B82Y 30/00, C08K 3/36, C08K 9/06

(54) **Dispersion von hydrophobierten Siliciumdioxidpartikeln und Granulat hiervon**
Dispersion made of hydrophobic silicon dioxide particles and granulate made from same
Dispersion de particules de dioxyde de silicium hydrophobes et granulé ainsi obtenu

(43) Veröffentlichungstag der Anmeldung: 20.01.2010
(73) Patentinhaber: Evonik Degussa GmbH, 45128 Essen (DE)
(72) Erfinder: Lortz, Wolfgang, 63607 Wächtersbach (DE); Perlet, Gabriele, 63538 Großkrotzenburg (DE); Diener, Uwe, 63538 Großkrotzenburg (DE); Reitz, Sascha, 63456 Hanau (DE)

(56) Entgegenhaltungen:
- EP-A- 0 943 664
- EP-A- 1 571 181
- WO-A-2004/103508
- US-A1- 2007 196 597

## Beschreibung

Die Erfindung betrifft ein Verfahren zur Herstellung einer Dispersion oberflächenmodifizierter Siliciumdioxidpartikel in einem organischen Lösungsmittel, sowie die durch das Verfahren erhältliche Dispersion selbst. Die Erfindung betrifft weiterhin ein Verfahren zur Herstellung eines Granulates ausgehend von der Dispersion, sowie das Granulat selbst.

Siliciumdioxidpartikel als Bestandteil von Lackformulierungen sind schon lange bekannt. Das Hauptaugenmerk der gegenwärtigen Forschung liegt in der Bereitstellung von Lackformulierungen, die insbesondere ein hohes Maß an Transparenz und Kratzfestigkeit, bei guter Verarbeitbarkeit und Lagerstabilität, aufweisen.

In EP-A-943664 wird ein nanopartikelhaltiges, transparentes Lackbindemittel offenbart, welches durch Düsenstrahldispergierung nanoskaliger Partikel im Bindemittel erhalten wird. Als nanoskalige Partikel können zum Beispiel hydrophobierte, pyrogen hergestellte Siliciumdioxidpartikel eingesetzt werden.

In EP-A-1923412 wird dagegen ausgeführt, dass das in EP-A-943664 offenbarte Verfahren keine ausreichende Dispergierung des eingesetzten hydrophobierten, pyrogen hergestellten Siliciumdioxidpartikel erlaubt und es daher zu Trübungen im Lackbindemittel kommt.

Weiterhin wird in EP-A-1923412 ausgeführt, dass pyrogen hergestellte Siliciumdioxidpartikel aufgrund ihrer Aggregatstruktur prinzipiell als Bestandteil von Lackformulierungen für hochtransparente Lacke wenig geeignet sind.

Auch in DE-A-102006020987 wird darauf hingewiesen, dass bei Verwendung von pyrogen hergestelltem Siliciumdioxid mit Trübungen in Lackformulierungen zu rechnen ist. In DE-A-102006020987 wird vorgeschlagen, daher ein spezielles strukturmodifiziertes, pyrogenes Siliciumdioxid einzusetzen. Die Strukturmodifizierung der Siliciumdioxidpartikel kann beispielsweise durch mechanische Einwirkung und nachfolgender Vermahlung in einer Mühle erfolgen. Hierdurch können Trübungen in Lackformulierungen reduziert werden.

In EP-A-943664 werden transparente Lackbindemittel offenbart, hergestellt durch Düsenstrahldispergierung von nanoskaligen, oberflächenmodifizierten Siliciumdioxidpartikeln im Bindemittel. Als Bindemittel werden (Co)-Polymerisate der (Meth)acrylsäure und deren weitere funktionelle Gruppen tragenden Estern mit weiteren, olefinisch ungesättigten Verbindungen; Polyether-, Polyester-, Polycarbonat-, Polyurethan- und Epoxidharze und Mischungen dieser Polymere angegeben.

Durch die Düsenstrahldispergierung soll eine deutliche Reduzierung der Agglomeratanteile bewirken, so daß die nach diesem Verfahren hergestellten Feststoffdispersionen als Lackbindemittel für transparente Beschichtungen eingesetzt werden können. Zudem erwiesen sich die Dispersionen von Nanopartikeln in Gegenwart von Lackbindemittel als besonders stabil gegen Reagglomeration und Sedimentation.

In EP-A-1571181 wird ein Verfahren zur Herstellung von niedrigviskosen Siliciumdioxiddispersionen offenbart, indem man ein Dispergiermittel und Siliciumdioxidpartikel in einem wässerigen Medium, wobei das Verhältnis einer zugesetzten Menge des Dispergiermittels bei der ersten Zugabe zu den Siliciumdioxidpartikeln kleiner ist als das Verhältnis bei der letzten Zugabe. Aus der dispersion können Granulate erhalten werden, die beispielsweise mittels hochdruckhomogenierung zerlegt werden können.

Pyrogen hergestellte Siliciumdioxidpartikel zeichnen sich durch ihre gute Verfügbarkeit und hohe Reinheit aus. In Dispersionen führt ihre in der Regel aggregierte Struktur oft zu einer nicht ausreichenden Transparenz. Durch den Einsatz von Kugelmühlen kann zwar die Transparenz erhöht werden, die Dispersion wird jedoch durch den Abrieb der Kugeln verunreinigt. Es wird auch beobachtet, dass organische Dispergieradditive bei energischen Dispergierbedingungen abgebaut werden können, was zu Trübungen, verringerter Stabilität und erhöhter Viskosität führen kann.

Daher war es die Aufgabe dieser Erfindung aggregierte, insbesondere pyrogen hergestellte Siliciumdioxidpartikel in einer Form bereitzustellen, die deren Einsatz in transparenten Lackformulierungen erlaubt.

Gegenstand der Erfindung ist ein Verfahren zur Herstellung einer Dispersion von oberflächenmodifizierten Siliciumdioxidpartikeln mit einem mittleren Partikeldurchmesser von höchstens 100 nm durch eine Hochdruckvermahlung einer Vordispersion enthaltend
a) 10 bis 50 Gew.-% oberflächenmodifizierte Siliciumdioxidpartikel, die
   - wenigstens teilweise aggregiert sind,
   - eine Methanolbenetzbarkeit von 25 bis 45 aufweisen
   - über Si-O-Si-Bindungen mit der oberflächenmodifizierenden Komponente verbunden sind und
   - auf ihrer Oberfläche noch reaktive Gruppen aufweisen,
b) wenigstens einen Glykolmonoether der allgemeinen Formel A
   H₃C(CH₂)ₘ-O-(CH₂)ₙ-[O-(CH₂)ₒ]ₚ-OH (A), mit
   m = 0, 1, 2 oder 3; n, o = 2, 3 oder 4; p = 0 oder 1
c) wenigstens einen Carbonsäureester der allgemeinen Formel B
   H₂ₓ₊₁Cₓ-O-CH₂-(CHR)-[O-CHR]_{y}-O-C(=O)-C_{z}H_{2z+1} (B) mit
   R = H, CH₃, C₂H₅, C₃H₇; x, z = 1, 2 oder 3; y = 0 oder 1;
d) wobei das molare Verhältnis A/B 10:90 bis 40:60 ist und m, n, o, p, x, y und z unabhängig voneinander sind, wobei
e) während der Hochdruckvermahlung die flüssige Phase der Vordispersion aus wenigstens einem Glykolmonoether der allgemeinen Formel A und wenigstens einem Carbonsäureester der allgemeinen Formel B besteht und
f) die Hochdruckvermahlung durchgeführt wird, indem man die Vordispersion in wenigstens zwei Teilströme aufteilt, diese unter einen Druck von 50 bis 500 MPa setzt, und über jeweils eine Düse auf einen gemeinsamen Kollisionspunkt hin entspannt.

Bei den reaktiven Gruppen auf der Partikeloberfläche handelt es sich um solche, die bereits auf den eingesetzten Partikeln vorliegen und solchen, die während des Dispergiervorganges gebildet werden.

Bei den reaktiven Gruppen handelt es sich überwiegend oder ausschließlich um OH-Gruppen. Die reaktiven Gruppen können dabei vollständig oder nur teilweise mit den Bestandteilen der flüssigen Phase unter Bildung kovalenter, ionischer oder koordinativer Verbindung reagieren. Teilweise deshalb, weil beispielsweise einzelne reaktive Gruppen auf den eingesetzten oberflächenmodifizierten Siliciumdioxidpartikeln durch die Abschirmung der oberflächenmodifizierenden Verbindungen sterisch nicht zugänglich sind.

Bei dem erfindungsgemäßen Verfahren liegt wenigstens ein Teil der eingesetzten, oberflächenmodifizierten Siliciumdioxidpartikel in Form von Aggregaten vor. Unter teilweise ist zu verstehen, dass der Anteil aggregierter Partikel wenigstens 5 Gew.-%, bezogen auf die Summe der Aggregate und nicht aggregierten Partikel, gemäß der vorliegenden Erfindung sind dies Primärpartikel, beträgt. Bevorzugt werden jedoch Partikel eingesetzt, die weitestgehend aggregiert vorliegen, also zu mindestens 80 Gew.-%, in der Regel zu mindestens 90 Gew.-%, bezogen auf die Summe der Aggregate und nicht aggregierten Partikel. Die Anteile können beispielsweise durch Auszählung von TEM-Aufnahmen (TEM=Transmisions-ElektronenMikroskopie) ermittelt werden.

Unter Aggregaten sind fest, beispielsweise über Sinterhälse, verbundene Primärpartikel zu verstehen. Die Aggregate ihrerseits können sich zu Agglomeraten zusammenlagern, in denen die Aggregate nur lose miteinander verbunden sind. Agglomerate können bereits durch Einbringen von geringen Scherenergien wieder gespalten werden.

Der mittlere Partikeldurchmesser der in der Dispersion nach der Hochdruckvermahlung vorliegenden Partikel, umfassend Aggregate und Primärpartikel, beträgt höchstens 100 nm. Bevorzugt beträgt er 50 bis 100 nm, besonders bevorzugt 60 bis 90 nm.

Der mittlere Partikeldurchmesser der in der Vordispersion vorliegenden Teilchen ist größer als 100 nm. Der mittlere Partikeldurchmesser kann 200 nm bis mehrere Hundert Mikrometer betragen und umfasst sowohl Aggregate wie auch Agglomerate. Er kann zum Beispiel durch dynamische Lichtstreuung bestimmt werden. Die Vordispersion kann bei deutlich niedrigeren Scherraten hergestellt werden, als die erfindungsgemäße Dispersion. Beispielsweise können einfache Rührer oder Dissolver eingesetzt werden. Die Vordispersion dient hauptsächlich dem Zweck gegebenenfalls Agglomerate von oberflächenmodifizierten Siliciumdioxidpartikeln, die durch das Zusammenlagern von Aggregaten über kohäsive Kräfte entstehen können, aufzulösen.

Abhängig davon, welches Oberflächenmodifizierungsmittel in welcher Menge eingesetzt wird, können Siliciumdioxidpartikel mit unterschiedlich ausgeprägtem hydrophobem oder hydrophilem Verhalten hergestellt werden. Ein Maß für den Grad der Oberflächeneigenschaften der im Verfahren eingesetzten oberflächenmodifizierten Siliciumdioxidpartikel, hydrophil bis hydrophob, stellt die Methanolbenetzbarkeit dar. Bei der Bestimmung der Methanolbenetzbarkeit werden in transparente Zentrifugenröhrchen jeweils 0,2 g (± 0,005 g) oberflächenmodifizierte Siliciumdioxidpartikel eingewogen. Es werden zu jeder Einwaage 8,0 ml eines Methanol/Wasser Gemisches mit jeweils 10, 20, 30, 40, 50, 60, 70 und 80 Vol.-% Methanol zugegeben. Die verschlossenen Röhrchen werden 30 Sekunden geschüttelt und anschließend 5 Minuten bei 2500 min⁻¹ zentrifugiert. Die Sedimentvolumina werden abgelesen, in Prozent umgerechnet und graphisch gegen den Methanolgehalt (Vol.-%) aufgetragen. Der Wendepunkt der Kurve entspricht der Methanolbenetzbarkeit. Je höher die Methanolbenetzbarkeit desto größer ist die Hydrophobie der Siliciumdioxidpartikel. Die Methanolbenetzbarkeit der eingesetzten oberflächenmodifizierten Siliciumdioxidpartikel beträgt bevorzugt 20 bis 50, besonders bevorzugt 25 bis 45 und ganz besonders bevorzugt 30 bis 40.

In der Regel reagieren nicht alle reaktiven Gruppen der eingesetzten oberflächenmodifizierten Siliciumdioxidpartikel mit dem Oberflächenmodifizierungsmittel. So spielt beispielsweise die Zugänglichkeit der reaktiven Gruppen eine Rolle.

In einer bevorzugten Ausführungsform des erfindungsgemäßen Verfahrens können oberflächenmodifizierte Siliciumdioxidpartikel eingesetzt werden, welche durch Oberflächenmodifizierung von pyrogenen, das heißt durch Flammenhydrolyse oder Flammenoxidation, erhaltenen Siliciumdioxidpartikeln erhalten wurden. Auch nachträglich strukturmodifizierte Typen können eingesetzt werden. Die Strukturmodifizierung der oberflächenmodifizierten Siliciumdioxidpartikel kann durch mechanische Einwirkung und einer eventuellen Nachvermahlung erfolgen. Die Strukturmodifizierung kann zum Beispiel mit einer Kugelmühle oder einer kontinuierlich arbeitenden Kugelmühle erfolgen. Die Nachvermahlung kann zum Beispiel mittels einer Luftstrahlmühle, Zahnscheibenmühle oder Stiftmühle erfolgen. Die Strukturmodifizierung ist auch in EP-A-808880 und DE-A-102006048509 beschrieben.

Als Mittel zur Herstellung der in der Vordispersion vorliegenden oberflächenmodifizierten Siliciumdioxidpartikel werden solche eingesetzt, die mindestens eine funktionelle Gruppe aufweisen, die eine Si-O-Si-Bindung mit den reaktiven Gruppen auf der Partikeloberfläche der zu modifizierenden Siliciumdioxidpartikel ausbilden.

Neben der funktionellen Gruppe, die mit der Oberflächengruppe des Partikels eine chemische Bindung eingehen kann, weist das Modifizierungsmittel im allgemeinen einen Molekülrest auf, der nach Verknüpfung des Oberflächenmodifizierungsmittels dem Partikel mehr oder weniger starke hydrophobe oder hydrophile Eigenschaften verleihen kann.

Bevorzugt eingesetzte Oberflächenmodifizierungsmittel bei der Herstellung der eingesetzten oberflächenmodifizierten Siliciumdioxidpartikel sind Silane. Die Kohlenstoffketten dieser Verbindungen können durch O-, S-, oder NH-Gruppen unterbrochen sein. Es können ein oder mehrere Modifizierungsmittel verwendet werden. Die eingesetzten Silane weisen mindestens eine nicht hydrolysierbare Gruppe auf.

Bevorzugte Silane haben die allgemeine Formel RₓSiY₄₋ₓ (I)
worin x den Wert 1, 2 oder 3 hat und die Reste R gleich oder verschieden sind und nicht hydrolysierbare Gruppen darstellen, die Reste Y gleich oder verschieden sind und hydrolysierbare Gruppen oder Hydroxygruppen bedeuten.

In der allgemeinen Formel (I) sind die hydrolysierbaren Gruppen Y, die gleich oder voneinander verschieden sein können, beispielsweise
- Wasserstoff,
- Halogen, beispielsweise F, Cl, Br oder I,
- Alkoxy, bevorzugt C₁-C₆-Alkoxy, wie Methoxy, Ethoxy, n-Propoxy, i-Propoxy und Butoxy,
- Aryloxy, bevorzugt C₆-C₁₀-Aryloxy, wie Phenoxy,
- Acyloxy, bevorzugt C₁-C₆-Acyloxy, wie Acetoxy oder Propionyloxy,
- Alkylcarbonyl, bevorzugt C₂-C₇-Alkylcarbonyl, wie Acetyl.

Bevorzugte hydrolysierbare Reste sind Halogen, Alkoxygruppen und Acyloxygruppen. Besonders bevorzugte hydrolysierbare Reste sind C₁-C₄-Alkoxygruppen, insbesondere Methoxy und Ethoxy.

Bei den nicht hydrolysierbaren Resten R, die gleich oder voneinander verschieden sein können, handelt es sich um Reste R mit oder ohne eine funktionelle Gruppe.

Der nicht hydrolysierbare Rest R ohne funktionelle Gruppe ist beispielsweise
- Alkyl, bevorzugt C₁-C₈-Alkyl, wie Methyl, Ethyl,
   n-Propyl, Isopropyl, n-Butyl, sek.-Butyl und tert.-Butyl, Pentyl, Hexyl, Octyl oder Cyclohexyl;
   substituiertes Alkyl.
- Alkenyl bevorzugt C₂-C₆-Alkenyl, wie Vinyl, 1-Propenyl, 2-Propenyl und Butenyl,
- Alkinyl, bevorzugt C₂-C₆-Alkinyl, wie Acetylenyl und Propargyl,
- Aryl, bevorzugt C₆-C₁₀-Aryl, wie Phenyl und Naphthyl, sowie entsprechende Alkaryle und Aralkyle wie Tolyl, Benzyl und Phenethyl.

Bevorzugte Oberflächenmodifizierungsmittel können insbesondere CH₃SiCl₃, CH₃Si(OC₂H₅)₃, CH₃Si(OCH₃)₃, C₂H₅SiCl₃, C₂H₅Si(OC₂H₅)₃, C₂H₅Si(OCH₃)₃, C₃H₇Si(OC₂H₅)₃, (C₂H₅O)₃SiC₃H₆Cl, (CH₃)₂SiCl₂, (CH₃)₂Si(OC₂H₅)₂, (CH₃)₂Si(OH)₂, C₆H₅Si(OCH₃)₃, C₆H(Si(OC₂H₅)₃, C₆H₅CH₂CH₂Si(OCH₃)₃, (C₆H₅)₂SiCl₂, (C₆H₅)₂Si(OC₂H₅)₂, (i-C₃H₇)₃SiOH, CH₂=CHSi(OOCCH₃)₃, CH₂=CHSiCl₃, CH₂=CH-Si(OC₂H₅)₃, CH₂=CHSi(OC₂H₅)₃, CH₂=CH-Si(OC₂H₄OCH₃)₃, CH₂=CH-CH₂-Si(OC₂H₅)₃, CH₂=CH-CH₂-Si(OC₂H₅)₃, CH₂=CH-CH₂-Si(OOCCH₃)₃, n-C₆H₁₃-CH₂-CH₂-Si(OC₂H₅)₃, und n-C₈H₁₇-CH₂-CH₂-Si(OC₂H₅)₃ sein.

Ein nicht hydrolysierbarer Rest R mit einer funktionellen Gruppe kann beispielsweise als funktionelle Gruppe eine Epoxid- (wie Glycidyl- oder Glycidyloxy-), Hydroxy-, Ether-, Amino-, Monoalkylamino-, Dialkylamino-, gegebenenfalls substituierte Anilino-, Amid-, Carboxy-, Acryl-, Acryloxy-, Methacryl-, Methacryloxy-, Mercapto-, Cyano-, Alkoxy-, Isocyanato-, Aldehyd-, Alkylcarbonyl-, Säureanhydrid- und Phosphorsäuregruppe umfassen.

Bevorzugte Beispiele für nicht hydrolysierbare Reste R mit funktionellen Gruppen sind ein
- Glycidyl- oder ein Glycidyloxy-(C₁-C₂₀)-alkylen-Rest, wie beta-Glycidyloxyethyl, gamma-Glycidyloxypropyl,
   delta-Glycidyloxybutyl, epsilon-Glycidyloxypentyl,
   omega-Glycidyloxyhexyl und
   2-(3,4-Epoxycyclohexyl)ethyl,
- (Meth)acryloxy-(C₁-C₆)-alkylen-Rest, wie (Meth)acryloxymethyl, (Meth)acryloxyethyl, (Meth)acryloxypropyl oder (Meth)acryloxybutyl, und
- 3-Isocyanatopropylrest.

Konkret können als Oberflächenmodifizierungsmittel gamma-Glycidyloxypropyltrimethoxysilan, Glycidyloxypropyltriethoxysilan, 3-Isocyanatopropyltriethoxysilan, 3-Isocyanatopropyldimethylchlorsilan, Aminopropyltriethoxysilan, Aminopropyltrimethoxysilan, Aminomethyltriethoxysilan, Aminomethyltrimethoxysilan, Aminopropyltrichlorsilan, (N-Cyclohexylaminomethyl)triethoxysilan, 2-Aminoethyl-3-aminopropyltrimethoxysilan, N-(n-Butyl)-3-Aminopropyltrimethoxysilan, 2-Aminoethyl-3-aminopropylmethyldimethoxysilan, (3-Aminopropyl)diethoxymethylsilan, (3-Aminopropyl)ethyldiethoxysilan, (3-Methylaminopropyl)trimethoxysilan, (Aminoethylaminomethyl)phenethyltrimethoxysilan, (N,N-Diethyl-3-aminopropyl)trimethoxysilan, (N,N-Dimethylamino)dimethylchlorosilan, (N,N-Dimethylaminopropyl)trimethoxysilan, (N-Acetylglycyl)-3-aminopropyltrimethoxysilan, (N-Cyclohexylaminomethyl)methyldiethoxysilan, (N-Cyclohexylaminomethyl)triethoxysilan, (N-Phenylaminomethyl)methyldimethoxysilan, (N-Phenylaminomethyl)trimethoxysilan, 11-Aminoundecyltriethoxysilan, 3-(1,3-Dimethylbutyliden)aminopropyltriethoxysilan, 3-(1-Aminopropoxy)-3,3-dimethyl-1-propenyltrimethoxysilan, 3-(2,4-Dinitrophenylamino)propyltriethoxysilan, 3-(2-Aminoethylamino)propylmethyldimethoxysilan, 3-(2-Aminoethylamino)propyltrimethoxysilan,3-(Cyclohexylamino)propyltrimethoxysilan, 3-(Aminophenoxy)propyltrimethoxysilan, 3-(N-Allylamino)propyltrimethoxysilan, 3-(N-Styrylmethyl-2-aminoethylamino)propyltrimethoxysilan, 3-(Phenylamino)propyltrimethoxysilan, 3-Aminopropyldiisopropylethoxysilan, 3-Aminopro-pyldimethylethoxysilan, 3-Aminopropylmethylbis(trimethylsiloxy)silan, 3-Aminopropylmethyldiethoxysilan, 3-Aminopropyltris(methoxyethoxyethoxy)silan, 3-Aminopropyltris(trimethylsiloxy)silan, 4-Aminobutyltriethoxysilan, Aminophenyltrimethoxysilan, Bis(2-hydroxyethyl)-3-aminopropyltriethoxysilan, Diethylaminomethyltriethoxysilan, N,N-Dimethylaminomethylethoxysilan, N-(2-Aminoethyl)-3-aminoisobutyldimethylmethoxysilan, N-(2-Aminoethyl)-3-aminopropylmethyldimethoxysilan, N-(2-Aminoethyl)-3-aminopropyltriethoxysilan, N-(2-Aminoethyl)-3-aminopropyltrimethoxysilan, N-(2-Aminomethyl)-11-aminoundecyltrimethoxysilan, N-(3-Acryloxy-2-hydroxypropyl)-3-aminopropyltriethoxysilan, N-(3-Methacryloxy-2-hydroxypropyl)-3-aminopropyltriethoxysilan, N-(6-Aminohexyl)aminopropyltrimethoxysilan, N-(Hydroxyethyl)-N-methylaminopropyltrimethoxysilan, N-3-[(Amino(polypropylenoxy)]aminopropyltrimethoxysilan, n-Butylaminopropyltrimethoxysilan, N-Cyclohexylaminopropyltrimethoxysilan, N-Ethylaminoisobutylmethyldiethoxysilan, N-Ethylaminoisobutyltrimethoxysilan, N-Methylaminopropylmethyldimethoxysilan, N-Methylaminopropyltrimethoxysilan, N-Phenylaminomethyltriethoxysilan, Phenylbis(dimethylamino)chlorosilan, tert.-Butylaminopropyltrimethoxysilan, Aminopropylsilanetriol, N-(2-Aminoethyl)-3-aminopropyl-silantriol, N-Cyclohexylaminomethyltriethoxysilan, N-Cyclohexylaminomethylmethyldiethoxysilan und N-Phenylaminomethyltrimethoxysilan, 3-(Meth)acryloxypropyltriethoxysilan und 3-(Meth)acryloxypropyltrimethoxysilan eingesetzt werden.

Weiterhin können die in der Vordispersion vorliegenden Siliciumdioxidpartikel auch durch Silylamine oberflächenmodifiziert werden. Unter Silylaminen sind Verbindungen zu verstehen, welche wenigstens eine Si-N-Bindung aufweisen und die mit den auf der Oberfläche der Siliciumdioxidpartikel vorliegenden Si-OH-Gruppen reagieren können. Beispiele hierfür sind Vinyldimethylsilylamin, Octyldimethylsilylamin, Phenyldimethylsilylamin, Bis(dimethylaminodimethylsilyl)ethan, Hexamethyldisilazan, (N,N-Dimethylamino)trimethylsilan und Bis(trifluoropropyl)tetramethyldisilazan. Weiterhin können cycliche Silazane eingesetzt werden.

Als Oberflächenmodifizierungsmittel eigen sich auch die cyclischen Polysiloxane D3, D4, D5 und ihre Homologen, wobei unter D3, D4 und D5 cyclische Polysiloxane mit 3, 4 oder 5 Einheiten des Typs -O-Si(CH₃)₂ verstanden wird, beispielsweise Octamethylcyclotetrasiloxan = D4.
Auch Polysiloxane oder Siliconöle des Types Y-O-[(RR'SiO)ₘ-(R"R"'SiO)ₙ]ᵤ-Y, mit
m = 0,1,2,3,... ∞, bevorzugt 0,1,2,3,... 100000,
n = 0,1,2,3,... ∞, bevorzugt 0,1,2,3,... 100000,
u = 0,1,2,3,....∞, bevorzugt 0,1,2,3,... 100000,
Y = CH₃, H, CₙH₂ₙ₊₁, n=2-20; Si(CH₃)₃, Si(CH₃)₂H, Si(CH₃)₂OH, Si(CH₃)₂(OCH₃), Si(CH₃)₂(CₙH₂ₙ₊₁), n=2-20
R, R', R", R"', jeweils unabhängig voneinander Alkyl wie CₙH₂ₙ₊₁, n = 1 - 20; Aryl wie Phenylradikale und substitutierte Phenylradikale, (CH₂)ₙ-NH₂, H.
Polysiloxane oder Siliconöle werden zur Oberflächenmodifizierung gewöhnlich thermisch aktiviert.

Geeignete in der Vordispersion einsetzbare, oberflächenmodifizierte Siliciumdioxidpartikel sind die kommerziell erhältlichen Materialien AEROSIL^{®} R104, AEROSIL^{®} R106, AEROSIL^{®} R202, AEROSIL^{®} R805, AEROSIL^{®} R812, AEROSIL^{®} R812 S, AEROSIL^{®} R972, AEROSIL^{®} R974, AEROSIL^{®} R8200, AEROXIDE^{®} LE-1 and AEROXIDE^{®} LE-2, AEROSIL^{®} R 9200, AEROSIL^{®} R 8200 und AEROSIL^{®} R 7200, alle Evonik Degussa.

Der Kohlenstoffgehalt der eingesetzten oberflächenmodifizierten Siliciumdioxidpartikel kann vorzugsweise 0,1 bis 2,5 Gew.-% betragen.

Besonders bevorzugt kann AEROSIL^{®} R974 eingesetzt werden, das durch die Umsetzung von AEROSIL^{®} 200 mit Dimethyldichlorsilan erhalten wird.

Der Anteil der eingesetzten oberflächenmodifizierten Siliciumdioxidpartikeln bezogen auf die Vordispersion, beträgt 10 bis 50 Gew.-% und hängt unter anderem von der Art der Oberflächenmodifizierung der eingesetzten Siliciumdioxidpartikel und der Zusammensetzung der flüssigen Phase ab. Bevorzugt ist ein Bereich von 20 bis 40 Gew.-%.

Ein wesentlicher Bestandteil des erfindungsgemäßen Verfahrens sind ein oder mehrere Glykolmonoether der allgemeinen Formel H₃C(CH₂)ₘ-O-(CH₂)ₙ-[O-(CH₂)ₒ]ₚ-OH (A) mit
m=0, 1, 2 oder 3,
n, o = 2, 3 oder 4,
p = 0 oder 1.

Bevorzugt kann m = 2 oder 3, n = 2 oder 3, o = 2 oder 3 und p = 0 oder 1 sein. Besonders bevorzugt kann m = 2, n = 2, o = 2 und p = 1 sein. Ganz besonders bevorzugt kann H₃C(CH₂)₃-O-(CH₂)₂-OH eingesetzt werden.

Ein weiterer wesentlicher Bestandteil des erfindungsgemäßen Verfahrens sind ein oder mehrere Carbonsäureester der allgemeinen Formel
H₂ₓ₊₁Cₓ-O-CH₂-(CHR)-[O-CHR]_{y}-O-C(=O)-C_{z}H_{2z+1} (B) mit
R = H, CH₃, C₂H₅, C₃H₇
x, z = 1, 2 oder 3,
y = 0 oder 1.

Bevorzugt kann x = 1, R = H oder CH₃, y = 0 oder 1 und z = 1 oder 2 sein.

Besonders bevorzugt kann x = 1, R = CH₃, y = 0 und z = 1 sein, entsprechend H₃C-O-CH₂-(CHCH₃)-O-C(=O)-CH₃.

Weiterhin ist für das erfindungsgemäße Verfahren wesentlich, dass das molare Verhältnis
H₃C(CH₂)ₘ-O-(CH₂)ₙ-[O-(CH₂)ₒ]ₚ-OH (A)/
H₂ₓ₊₁Cₓ-O-CH₂-(CHR)-[O-CHR]_{y}-O-C(=O)-C_{z}H_{2z+1} (B)
10:90 bis 40:60, bevorzugt 15:85 bis 35:65, besonders bevorzugt 20:80 bis 30:70 ist.

Die Verbindungen der allgemeinen Formeln A und B stellen in der Regel die flüssige Phase der erfindungsgemäßen Dispersion dar. Diese kann jedoch noch weitere Lösungsmittel enthalten, die nach der Hochdruckvermahlung zugegeben werden können. Zur Vermischung der Bestandteile reichen beispielsweise Rührer oder Dissolver aus. Geeignete Lösungsmittel können Alkohole, Ether, Ketone und Aromaten sein.

Geeignete Alkohole können sein: Methanol, Ethanol, n-Propanol, i-Propanol, n-Butanol, i-Butanol, sec-Butanol, tert.-Butanol, n-Pentanol, i-Pentanol, 2-Methylbutanol, sec-Pentanol, tert.-Pentanol, 3-Methoxybutanol, n-Hexanol, 2-Methylpentanol, sec-Hexanol, 2-Ethylbutanol, sec-Heptanol, 3-Heptanol, n-Octanol, 2-Ethylhexanol, sec-Octanol, n-Nonylalkohol, 2,6-Dimethylheptanol-4, n-Decanol, sec-Undecylalkohol, Trimethylnonylalkohol, sec-Tetradecylalkohol, sec-Heptadecylalkohol, Phenol, Cyclohexanol, Methylcyclohexanol, 3,3,5-Trimethylcyclohexanol, Benzylalkohol, Diacetonalkohol, Ethylenglykol, 1,2-Propylenlycol, 1,3-Butylenglykol, 2,4-Pentandiol, 2-Methyl-2,4-Pentandiol, 2,5-Hexandiol, 2,4-Heptandiol, 2-Ethyl-1,3-Hexandiol, Diethylenglykol, Dipropylenglykol, Hexandiol, Octandiol, Triethylenglykol, Tripropylenglykol und Glycerin.

Geeignete Ester können sein: Diethylcarbonat, Ethylencarbonat, Propylencarbonat, Methylacetat, Ethylacetat, gamma-Butyrolacton, gamma-Valerolacton, n-Propylacetat, iso-Propylacetat, n-Butylacetat, iso-Butylacetat, sec-Butylacetat, n-Pentylacetat, sec-Pentylacetat, 3-Methoxybutylacetat, Methylpentylacetat, 2-Ethylbutylacetat, 2-Ethylhexylacetat, Benzylacetat, Cyclohexylacetat, Methylcyclohexylacetat, n-Nonylacetat, Methylacetoacetat, Ethylacetoacetat, Glykoldiacetat, Methoxytriglykolacetat, Ethylpropionat, n-Butylpropionat, iso-Amylpropionat, Diethyloxalat, Di-n-Butyloxalat, Methyllactat, Ethyllactat, n-Butyllactat, n-Amyllactat, Diethylmalonat, Dimethylphthalat und Diethylphthalat.

Geeignete Ether können sein: Dipropylether, Diisopropylether, Dioxan, Tetrahydrofuran, Tetrahydropyran, Ethylenglykoldimethylether, Ethylenglykoldiethylether, Ethylenglykoldipropylether, Propylenglykoldimethylether, Propylenglykoldiethylether, Propylenglykoldipropylether, Diethylenglykoldimethylether, Diethylenglykoldiethylether und Diethylenglykoldipropylether.

Geeignete Ketone können sein: Aceton, Methylethylketon, Methyl-n-propylketon, Methyl-n-butylketon, Diethylketon, Methyl-iso-butylketon, Methyl-n-pentylketon, Ethyl-n-butylketon, Methyl-n-hexylketon, Di-n-butylketon, Trimethylnonanon, Cyclohexanon, 2-Hexanon, Methylcyclohexanon, 2,4-Pentandion, Acetonylaceton, Acetophenon, Acetylaceton, 2,4-Hexandion, 2,4-Heptandion, 3,5-Heptandion, 2,4-Octandion, 3,5-Octandion, 2,4-Nonandion, 3,5-Nonandion, 5-Methyl-2,4-hexandion und 2,2,6,6-Tetramethyl-3,5-heptandion.

Weiterhin ist es wesentlich, dass man das in der Vordispersion eingesetzte oberflächenmodifizierte Siliciumdioxidpulver einer Hochdruckvermahlung zuführt. Die Hochdruckvermahlung kann beispielsweise so ausgeführt werden, dass man die Vordispersion unter einen Druck von 50 bis 500 MPa setzt und über eine Düse, beispielsweise eine Loch- oder Spaltdüse, entspannt, wobei der Bohrungsdurchmesser bzw. die Spaltbreite der Düse 0,05 bis 1 mm, bevorzugt 0,1 bis 0,5 mm, beträgt und das Verhältnis Länge/Durchmesser der Bohrung bzw. das Verhältnis Tiefe/Spaltbreite des Schlitzspaltes der Düse 1 bis 10 beträgt. Gegebenenfalls kann nach dieser Art der Dispergierung eine Abtrennung grober Partikel, beispielsweise durch Filtration oder Sedimentation, nötig sein.

Bei dem erfindungsgemäßen Verfahren wird die Vordispersion in wenigstens zwei Teilströme aufteilt, diese unter Druck setzt und über jeweils eine Düse auf einen gemeinsamen Kollisionspunkt hin entspannt.

Die Strahlen der Teilströme weisen dabei bevorzugt eine Geschwindigkeit von mindestens 300 m·s⁻¹, besonders bevorzugt ein von 400 bis 1000 m·s⁻¹ und ganz besonders bevorzugt eine von 600 bis 900 m·s⁻¹ auf. Unter Geschwindigkeit ist dabei die Geschwindigkeit der Teilströme im Düsenkanal zu verstehen. Diese ist definiert als Quotient aus Volumenstrom pro Düse in m³·s⁻¹ und Fläche der Bohrung einer Düse in m² definiert. Der Durchmesser der Bohrung beträgt in der Regel 0,1 bis 1 mm, bevorzugt 0,2 bis 0,4 mm.

Für den Fall, dass die Dispersion nicht zur Herstellung einer transparenten sondern einer transluzenten Beschichtung vorgesehen ist, kann anstelle der Hochdruckvermahlung eine Rotor-Stator-Dispergierung durchgeführt werden. Die Rotor-Stator-Dispergierung sollte bevorzugt bei einer Scherrate bei 10⁴ s⁻¹ oder mehr, besonders bevorzugt bei 2.10⁴ bis 4.10⁴ s⁻¹ durchgeführt werden.

Ein weiterer Gegenstand der Erfindung ist eine Dispersion von oberflächenmodifizierten Siliciumdioxidpartikeln mit einem mittleren Partikeldurchmesser von höchstens 100 nm, die reaktive Gruppen in Form von OH-Gruppen aufweisen, die mit den Bestandteilen der flüssigen Phase unter Bildung kovalenter, ionischer oder koordinativer Bindungen reagieren, wobei die flüssige Phase aus wenigstens einem Glykolmonoether der allgemeinen Formel H₃C(CH₂)ₘ-O-(CH₂)ₙ-[O-(CH₂)ₒ]ₚ-OH (A)
mit m = 0,1,2 oder 3; n, o = 2,3 oder 4, p = 0 oder 1
und wenigstens einem Carbonsäureester der allgemeinen Formel H₂ₓ₊₁Cₓ-O-CH₂-(CHR)-[O-CHR]_{y}-O-C(=O)-C_{z}H_{2z+1} (B)
mit R = H,CH₃,C₂H₅,C₃H₇; x,z = 1,2 oder 3, y = 0 oder 1
besteht, erhältlich nach dem erfindungsgemäßen Verfahren.

Weiterhin ist ein Verfahren Gegenstand der Erfindung, bei dem man ein Granulat oberflächenmodifizierter Siliciumdioxidpartikel durch Abtrennung der flüssigen Phase der erfindungsgemäßen Dispersion erhält.

Dies kann beispielsweise durch Destillieren, Filtrieren oder Zentrifugieren erfolgen. Die Abtrennung der flüssigen Phase muß dabei nicht vollständig sein. So können die nach dem erfindungsgemäßen Verfahren erhaltenen oberflächenmodifizierten Siliciumdioxidpartikel noch Anhaftungen von Lösungsmittel aufweisen. Falls gewünscht kann auch ein Trocknungsschritt nachgeschaltet werden. Ebenso können die nach der Abtrennung der flüssigen Phase erhaltenen Partikel mit geeigneten Lösungsmitteln gewaschen und nachfolgend beispielsweise durch Filtrieren oder Zentrifugieren abgetrennt werden.

Als geeignete Verfahren zur Abtrennung der flüssigen Phase haben sich die Sprühtrocknung und die Gefriertrocknung erwiesen.

In der Vordispersion können bevorzugt oberflächenmodifizierte Siliciumdioxidpartikel mit einer BET-Oberfläche von 40 bis 200 m²/g und einer Methanolbenetzbarkeit von 30 bis 40 eingesetzt werden, die durch Reaktion von pyrogen hergestellten Siliciumdioxidpartikeln mit Dimethyldichlorsilan erhalten werden.

Ein weiterer Gegenstand der Erfindung ist ein Granulat erhältlich nach dem erfindungsgemäßen Verfahren. Dieses ist trotz höherer Stampfdichte wesentlich einfacher zu dispergieren als die bei der Herstellung der erfindungsgemäßen Dispersion eingesetzten oberflächenmodifizierten Siliciumdioxidpartikel.

Ein weiterer Gegenstand der Erfindung ist die Verwendung der erfindungsgemäßen Dispersion oder des erfindungsgemäßen Granulates in kratzfesten, transluzenten oder transparenten Beschichtungen.

### Beispiele

Bestimmung der Viskosität der Dispersionen: Die Viskosität der erzeugten Dispersionen wurde mit einem Rotations-Rheometer der Firma Physica Model 300 und dem Meßbecher CC 27 bei 25°C ermittelt.

Bestimmung der in der Dispersion vorliegenden Partikelgröße: Die in der Dispersion vorliegende Partikelgröße wird mittels dynamischer Lichtstreuung bestimmt. Verwendet wird das Gerät Zetasizer 3000 HSa (Malvern Instruments, UK). Angegeben wird der Median-Wert der Volumenverteilung d₅₀₍ᵥ₎.

Bestimmung der Scherrate: Die Scherrate gemäß dem erfindungsgemäßen Verfahren wird als Umfangsgeschwindigkeit geteilt durch den Abstand der Flächen ausgedrückt.

Die Umfangsgeschwindigkeiten können aus der Drehzahl des Rotors und dem Rotordurchmesser errechnet werden. Der Abstand zwischen Rotor und Stator beträgt bei den eingesetzten Dispergiervorrichtungen ca. 1 mm.

### Beispiel 1 (gemäß Erfindung)

Mittels eines Dissolvers wird eine Vordispersion hergestellt, die 30 Gew.-% AEROSIL^{®} R974, Evonik Degussa, in einem Gemisch von H₃C-O-CH₂-(CHCH₃)-O-C(=O)-CH₃ und H₃C(CH₂)₃-O-(CH₂)₂-OH hergestellt, molares Verhältnis H₃C(CH₂)₃-O-(CH₂)₂-OH/H₃C-O-CH₂-(CHCH₃)-O-C(=O)-CH₃ = 22 : 78.

Diese Vordispersion wird anschließend in drei Teilströme geteilt, unter Druck gesetzt und die Teilströme über eine Diamantdüse auf einen gemeinsamen Kollisionspunkt hin entspannt, wobei die Teilströme jeweils einen Winkel von 120° und eine Geschwindigkeit von 700 m·s⁻¹ aufweisen. Die so erhaltene Dispersion wird anschließend nochmals unter den gleichen Bedingungen vermahlen.

Die erhaltene Dispersion weist einen mittels dynamischer Lichtstreuung mittleren Partikeldurchmesser (Medianwert) von 78 nm auf.

Die mittels Rotor-Stator-Dispergierung erhaltene Dispersion ist transluzent, die mittels Hochdruckvermahlung erhaltene Dispersion ist transparent.

Die mittels Hochdruckvermahlung erhaltene Dispersion weist eine sehr geringe Viskosität auf.

**Tabelle 1: Viskosität in Abhängigkeit von der Scherrate**

| | **Viskosität [mPa·s] Beispiel** | | | |
|---|---|---|---|---|
| **Scherrate [s⁻¹]** | **1** | **4** | **5a** | **5b** |
| 0,1 | 22,55 | 92,37 | 89,04 | 11,84 |
| 1,269 | 19,24 | 92,64 | 79,85 | 25,65 |
| 11,72 | 18,8 | 83,72 | 61,01 | 24,42 |
| 108,3 | 17,54 | 64,43 | 42,28 | 18,69 |
| 1000 | 16,1 | 50,71 | 89,04 | 11,84 |

Die erfindungsgemäßen Dispersionen zeichnen sich weiterhin dadurch aus, dass gebräuchliche Dispergieradditive, wie zum Beispiel LAD-1045 oder Dispers 652, beides Dispergieradditive der Fa. Tego, problemlos eingearbeitet werden können, ohne dass es zu einer Flockulation oder Gelierung kommt.

Die nach der Hochdruckvermahlung erhaltene Dispersion wird nachfolgend sprühgetrocknet (Inertgas: Stickstoff, Zerstäubung: 2-Stoffdüse, Eintrittstemperatur: 320°C, Austrittstemperatur: 150-170°C; Feststoffabscheidung: Zyklon/Filter.

Es werden Granulate mit einem mittleren Durchmesser von 30 µm erhalten.

### Beispiel 2 (Vergleich):

In 154,3 g H₃C-O-CH₂CH(CH₃)-O-C(=O)CH₃ und 25,7 g
H₃C-O-CH₂CH(CH₃)OH, molares Verhältnis
H₃C-O-(CH₂)₃-OH/ H₃C-O-CH₂CH(CH₃)-O-C(=O)CH₃ = 20:80, werden 80 g AEROSIL® R 974 mittels eines Dissolvers vordispergiert und nachfolgend mittels einer Rotor-Statormaschine dispergiert. Die Dispersion geliert innerhalb von Stunden. Eine Herstellung einer stabilen Dispersion ist nicht möglich.

### Beispiel 3 (gemäß Erfindung):

In 180 g H₃C-O-CH₂CH(CH₃)-O-C(=O)CH₃ und 30 g

H₃C(CH₂)₃-O-(CH₂)₂-OH, molares Verhältnis H₃C(CH₂)₃-O-(CH₂)₂-OH/H₃C-O-CH₂CH(CH₃)-O-C(=O)CH₃ = 16:84, werden 90 g AEROSIL®

R 974 mittels eines Dissolvers vordispergiert und nachfolgend mittels einer Rotor-Statormaschine dispergiert. Die Dispersion zeigt innerhalb eines Zeitraumes von 2 Wochen nur einen geringfügigen Anstieg der Viskosität.

### Beispiel 4 (gemäß Erfindung):

42,02 kg H₃C-O-CH₂CH(CH₃)-O-C(=O)CH₃ und 11,46 kg

H₃C(CH₂)₃-O-(CH₂)₂-OH, molares Verhältnis

H₃C(CH₂)₃-O-(CH₂)₂-OH/H₃C-O-CH₂CH(CH₃)-O-C(=O)CH₃ = 23:77, und 22,92 kg AEROSIL^{®} R 711 werden mit einer Rotor-Stator-Maschine Conti TDS bei einer Scherrate von 20000 s⁻¹ dispergiert.

### Beispiel 5a (gemäß Erfindung):

42,35 kg H₃C-O-CH₂CH(CH₃)-O-C(=O)CH₃, 11,55 kg

H₃C(CH₂)₃-O-(CH₂)₂-OH, molares Verhältnis

H₃C(CH₂)₃-O-(CH₂)₂-OH/H₃C-O-CH₂CH(CH₃)-O-C(=O)CH₃ = 23:77, und 30,80 kg AEROSIL^{®} R 972 werden mit einer Rotor-Stator-Maschine Conti TDS bei einer Scherrate von 20000 s⁻¹ dispergiert.

### Beispiel 5 b:

Diese Dispersion wird anschließend in drei Teilströme geteilt, unter Druck gesetzt und die Teilströme über eine Diamantdüse auf einen gemeinsamen Kollisionspunkt hin entspannt, wobei die Teilströme jeweils einen Winkel von 120° und eine Geschwindigkeit von 700 m·s⁻¹ aufweisen. Die so erhaltene Dispersion wird anschließend nochmals unter den gleichen Bedingungen vermahlen.

Der mittlere Partikeldurchmesser (Medianwert) der erhaltenen Dispersion weist einen mittels dynamischer Lichtstreuung bestimmten Wert von 82 nm auf.

### Beispiel 6: Herstellung eines Lackes

Es wird ein Lack mit der in Tabelle 2 gezeigten Zusammensetzung hergestellt. Dieser wird auf ein schwarz lackiertes Blech DT aufgespritzt, 24 Stunden bei Raumtemperatur und anschließend 2 Stunden bei 70°C getrocknet. Der Lack zeigt einen geringen Haze bei guter Kratzfestigkeit.

**Tabelle 2: Lack (Angaben in Gewichtsteilen [g])**

| | |
|---|---|
| Dispersion aus Beispiel 1 | 33 |
| Macrynal SM 565, 70% | 122 |
| Methoxypropylacetat | 0,5 |
| Butylacetat | 3 |
| Solvesso 100 | 4 |
| Xylol | 5,4 |

Die Verbindungen der allgemeinen Formeln A und B stellen in der Regel die flüssige Phase der erfindungsgemäßen Dispersion dar. Diese kann jedoch noch weitere Lösungsmittel enthalten, die nach der Hochdruckvermahlung zugegeben werden können. Zur Vermischung der Bestandteile reichen beispielsweise Rührer oder Dissolver aus. Geeignete Lösungsmittel können Alkohole, Ether, Ketone und Aromaten sein.

Geeignete Alkohole können sein: Methanol, Ethanol, n-Propanol, i-Propanol, n-Butanol, i-Butanol, sec-Butanol, tert.-Butanol, n-Pentanol, i-Pentanol, 2-Methylbutanol, sec-Pentanol, tert.-Pentanol, 3-Methoxybutanol, n-Hexanol, 2-Methylpentanol, sec-Hexanol, 2-Ethylbutanol, sec-Heptanol, 3-Heptanol, n-Octanol, 2-Ethylhexanol, sec-Octanol, n-Nonylalkohol, 2,6-Dimethylheptanol-4, n-Decanol, sec-Undecylalkohol, Trimethylnonylalkohol, sec-Tetradecylalkohol, sec-Heptadecylalkohol, Phenol, Cyclohexanol, Methylcyclohexanol, 3,3,5-Trimethylcyclohexanol, Benzylalkohol, Diacetonalkohol, Ethylenglykol, 1,2-Propylenlycol, 1,3-Butylenglykol, 2,4-Pentandiol, 2-Methyl-2,4-Pentandiol, 2,5-Hexandiol, 2,4-Heptandiol, 2-Ethyl-1,3-Hexandiol, Diethylenglykol, Dipropylenglykol, Hexandiol, Octandiol, Triethylenglykol, Tripropylenglykol und Glycerin.

Geeignete Ester können sein: Diethylcarbonat, Ethylencarbonat, Propylencarbonat, Methylacetat, Ethylacetat, gamma-Butyrolacton, gamma-Valerolacton, n-Propylacetat, iso-Propylacetat, n-Butylacetat, iso-Butylacetat, sec-Butylacetat, n-Pentylacetat, sec-Pentylacetat, 3-Methoxybutylacetat, Methylpentylacetat, 2-Ethylbutylacetat, 2-Ethylhexylacetat, Benzylacetat, Cyclohexylacetat, Methylcyclohexylacetat, n-Nonylacetat, Methylacetoacetat, Ethylacetoacetat, Glykoldiacetat, Methoxytriglykolacetat, Ethylpropionat, n-Butylpropionat, iso-Amylpropionat, Diethyloxalat, Di-n-Butyloxalat, Methyllactat, Ethyllactat, n-Butyllactat, n-Amyllactat, Diethylmalonat, Dimethylphthalat und Diethylphthalat.

Geeignete Ether können sein: Dipropylether, Diisopropylether, Dioxan, Tetrahydrofuran, Tetrahydropyran, Ethylenglykoldimethylether, Ethylenglykoldiethylether, Ethylenglykoldipropylether, Propylenglykoldimethylether, Propylenglykoldiethylether, Propylenglykoldipropylether, Diethylenglykoldimethylether, Diethylenglykoldiethylether und Diethylenglykoldipropylether.

Geeignete Ketone können sein: Aceton, Methylethylketon, Methyl-n-propylketon, Methyl-n-butylketon, Diethylketon, Methyl-iso-butylketon, Methyl-n-pentylketon, Ethyl-n-butylketon, Methyl-n-hexylketon, Di-n-butylketon, Trimethylnonanon, Cyclohexanon, 2-Hexanon, Methylcyclohexanon, 2,4-Pentandion, Acetonylaceton, Acetophenon, Acetylaceton, 2,4-Hexandion, 2,4-Heptandion, 3,5-Heptandion, 2,4-Octandion, 3,5-Octandion, 2,4-Nonandion, 3,5-Nonandion, 5-Methyl-2,4-hexandion und 2,2,6,6-Tetramethyl-3,5-heptandion.

Weiterhin ist es wesentlich, dass man das in der Vordispersion eingesetzte oberflächenmodifizierte Siliciumdioxidpulver einer Hochdruckvermahlung zuführt. Die Hochdruckvermahlung kann beispielsweise so ausgeführt werden, dass man die Vordispersion unter einen Druck von 50 bis 500 MPa setzt und über eine Düse, beispielsweise eine Loch- oder Spaltdüse, entspannt, wobei der Bohrungsdurchmesser bzw. die Spaltbreite der Düse 0,05 bis 1 mm, bevorzugt 0,1 bis 0,5 mm, beträgt und das Verhältnis Länge/Durchmesser der Bohrung bzw. das Verhältnis Tiefe/Spaltbreite des Schlitzspaltes der Düse 1 bis 10 beträgt. Gegebenenfalls kann nach dieser Art der Dispergierung eine Abtrennung grober Partikel, beispielsweise durch Filtration oder Sedimentation, nötig sein.

Bevorzugt ist eine Ausführungsform des erfindungsgemäßen Verfahrens, bei dem man die Vordispersion in wenigstens zwei Teilströme aufteilt, diese unter Druck setzt und über jeweils eine Düse auf einen gemeinsamen Kollisionspunkt hin entspannt.

Die Strahlen der Teilströme weisen dabei bevorzugt eine Geschwindigkeit von mindestens 300 m·s⁻¹, besonders bevorzugt ein von 400 bis 1000 m·s⁻¹ und ganz besonders bevorzugt eine von 600 bis 900 m·s⁻¹ auf. Unter Geschwindigkeit ist dabei die Geschwindigkeit der Teilströme im Düsenkanal zu verstehen. Diese ist definiert als Quotient aus Volumenstrom pro Düse in m³·s⁻¹ und Fläche der Bohrung einer Düse in m² definiert. Der Durchmesser der Bohrung beträgt in der Regel 0,1 bis 1 mm, bevorzugt 0,2 bis 0,4 mm.

Für den Fall, dass die Dispersion nicht zur Herstellung einer transparenten sondern einer transluzenten Beschichtung vorgesehen ist, kann anstelle der Hochdruckvermahlung eine Rotor-Stator-Dispergierung durchgeführt werden. Die Rotor-Stator-Dispergierung sollte bevorzugt bei einer Scherrate bei 10⁴ s⁻¹ oder mehr, besonders bevorzugt bei 2·10⁴ bis 4·10⁴ s⁻¹ durchgeführt werden.

Ein weiterer Gegenstand der Erfindung ist eine Dispersion erhältlich nach dem erfindungsgemäßen Verfahren.

Weiterhin ist ein Verfahren Gegenstand der Erfindung, bei dem man ein Granulat oberflächenmodifizierter Siliciumdioxidpartikel durch Abtrennung der flüssigen Phase der erfindungsgemäßen Dispersion erhält.

Dies kann beispielsweise durch Destillieren, Filtrieren oder Zentrifugieren erfolgen. Die Abtrennung der flüssigen Phase muß dabei nicht vollständig sein. So können die nach dem erfindungsgemäßen Verfahren erhaltenen oberflächenmodifizierten Siliciumdioxidpartikel noch Anhaftungen von Lösungsmittel aufweisen. Falls gewünscht kann auch ein Trocknungsschritt nachgeschaltet werden. Ebenso können die nach der Abtrennung der flüssigen Phase erhaltenen Partikel mit geeigneten Lösungsmitteln gewaschen und nachfolgend beispielsweise durch Filtrieren oder Zentrifugieren abgetrennt werden.

Als geeignete Verfahren zur Abtrennung der flüssigen Phase haben sich die Sprühtrocknung und die Gefriertrocknung erwiesen.

In der Vordispersion können bevorzugt oberflächenmodifizierte Siliciumdioxidpartikel mit einer BET-Oberfläche von 40 bis 200 m²/g und einer Methanolbenetzbarkeit von 30 bis 40 eingesetzt werden, die durch Reaktion von pyrogen hergestellten Siliciumdioxidpartikeln mit Dimethyldichlorsilan erhalten werden.
Ein weiterer Gegenstand der Erfindung ist ein Granulat erhältlich nach dem erfindungsgemäßen Verfahren. Dieses ist trotz höherer Stampfdichte wesentlich einfacher zu dispergieren als die bei der Herstellung der erfindungsgemäßen Dispersion eingesetzten oberflächenmodifizierten Siliciumdioxidpartikel.

Ein weiterer Gegenstand der Erfindung ist die Verwendung der erfindungsgemäßen Dispersion oder des erfindungsgemäßen Granulates in kratzfesten, transluzenten oder transparenten Beschichtungen.

### Beispiele

Bestimmung der Viskosität der Dispersionen: Die Viskosität der erzeugten Dispersionen wurde mit einem Rotations-Rheometer der Firma Physica Model 300 und dem Meßbecher CC 27 bei 25°C ermittelt.

Bestimmung der in der Dispersion vorliegenden Partikelgröße: Die in der Dispersion vorliegende Partikelgröße wird mittels dynamischer Lichtstreuung bestimmt. Verwendet wird das Gerät Zetasizer 3000 HSa (Malvern Instruments, UK). Angegeben wird der Median-Wert der Volumenverteilung d_{50(V)}.

Bestimmung der Scherrate: Die Scherrate gemäß dem erfindungsgemäßen Verfahren wird als Umfangsgeschwindigkeit geteilt durch den Abstand der Flächen ausgedrückt.

Die Umfangsgeschwindigkeiten können aus der Drehzahl des Rotors und dem Rotordurchmesser errechnet werden. Der Abstand zwischen Rotor und Stator beträgt bei den eingesetzten Dispergiervorrichtungen ca. 1 mm.

### Beispiel 1 (gemäß Erfindung):

Mittels eines Dissolvers wird eine Vordispersion hergestellt, die 30 Gew.-% AEROSIL^{®} R974, Evonik Degussa, in einem Gemisch von H₃C-O-CH₂-(CHCH₃)-O-C(=O)-CH₃ und H₃C(CH₂)₃-O-(CH₂)₂-OH hergestellt, molares Verhältnis H₃C (CH₂)₃-O-(CH₂)₂-OH/H₃C-O-CH₂-(CHCH₃)-O-C(=O)-CH₃ = 22 : 78.

Diese Vordispersion wird anschließend in drei Teilströme geteilt, unter Druck gesetzt und die Teilströme über eine Diamantdüse auf einen gemeinsamen Kollisionspunkt hin entspannt, wobei die Teilströme jeweils einen Winkel von 120° und eine Geschwindigkeit von 700 m·s⁻¹ aufweisen. Die so erhaltene Dispersion wird anschließend nochmals unter den gleichen Bedingungen vermahlen.

Die erhaltene Dispersion weist einen mittels dynamischer Lichtstreuung mittleren Partikeldurchmesser (Medianwert) von 78 nm auf.

Die mittels Rotor-Stator-Dispergierung erhaltene Dispersion ist transluzent, die mittels Hochdruckvermahlung erhaltene Dispersion ist transparent.

Die mittels Hochdruckvermahlung erhaltene Dispersion weist eine sehr geringe Viskosität auf.

**Tabelle 1: Viskosität in Abhängigkeit von der Scherrate**

| | **Viskosität [mPa·s] Beispiel** | | | |
|---|---|---|---|---|
| **Scherrate [s⁻¹]** | **1** | **4** | **5a** | **5b** |
| 0,1 | 22,55 | 92,37 | 89,04 | 11,84 |
| 1,269 | 19,24 | 92,64 | 79,85 | 25,65 |
| 11,72 | 18,8 | 83,72 | 61,01 | 24,42 |
| 108,3 | 17,54 | 64,43 | 42,28 | 18,69 |
| 1000 | 16,1 | 50,71 | 89,04 | 11,84 |

Die erfindungsgemäßen Dispersionen zeichnen sich weiterhin dadurch aus, dass gebräuchliche Dispergieradditive, wie zum Beispiel LAD-1045 oder Dispers 652, beides Dispergieradditive der Fa. Tego, problemlos eingearbeitet werden können, ohne dass es zu einer Flockulation oder Gelierung kommt.

Die nach der Hochdruckvermahlung erhaltene Dispersion wird nachfolgend sprühgetrocknet (Inertgas: Stickstoff, Zerstäubung: 2-Stoffdüse, Eintrittstemperatur: 320°C, Austrittstemperatur: 150-170°C; Feststoffabscheidung: Zyklon/Filter.

Es werden Granulate mit einem mittleren Durchmesser von 30 µm erhalten.

### Beispiel 2 (Vergleich) :

In 154,3 g H₃C-O-CH₂CH(CH₃)-O-C(=O)CH₃ und 25,7 g H₃C-O-CH₂CH(CH₃)OH, molares Verhältnis H₃C-O-(CH₂)₃-OH/ H₃C-O-CH₂CH(CH₃)-O-C(=O)CH₃ = 20:80, werden 80 g AEROSIL® R 974 mittels eines Dissolvers vordispergiert und nachfolgend mittels einer Rotor-Statormaschine dispergiert. Die Dispersion geliert innerhalb von Stunden. Eine Herstellung einer stabilen Dispersion ist nicht möglich.

### Beispiel 3 (gemäß Erfindung):

In 180 g H₃C-O-CH₂CH(CH₃)-O-C(=O)CH₃ und 30 g H₃C(CH₂)₃-O-(CH₂)₂-OH, molares Verhältnis H₃C(CH₂)₃-O-(CH₂)₂-OH/H₃C-O-CH₂CH(CH₃)-O-C(=O)CH₃ = 16:84, werden 90 g AEROSIL® R 974 mittels eines Dissolvers vordispergiert und nachfolgend mittels einer Rotor-Statormaschine dispergiert. Die Dispersion zeigt innerhalb eines Zeitraumes von 2 Wochen nur einen geringfügigen Anstieg der Viskosität.

### Beispiel 4 (gemäß Erfindung):

42,02 kg H₃C-O-CH₂CH(CH₃)-O-C(=O)CH₃ und 11,46 kg H₃C(CH₂)₃-O-(CH₂)₂-OH, molares Verhältnis H₃C(CH₂)₃-O-(CH₂)₂-OH/H₃C-O-CH₂CH(CH₃)-O-C(=O)CH₃ = 23:77, und 22,92 kg AEROSIL^{®} R711 werden mit einer Rotor-Stator-Maschine Conti TDS bei einer Scherrate von 20000 s⁻¹ dispergiert.

### Beispiel 5a (gemäß Erfindung):

42, 35 kg H₃C-O-CH₂CH(CH₃)-O-C(=O)CH₃, 11,55 kg H₃C(CH₂)₃-O-(CH₂)₂-OH, molares Verhältnis H₃C(CH₂)₃-O-(CH₂)₂-OH/H₃C-O-CH₂CH(CH₃)-O-C(=O)CH₃ = 23:77, und 30,80 kg AEROSIL^{®} R 972 werden mit einer Rotor-Stator-Maschine Conti TDS bei einer Scherrate von 20000 s⁻¹ dispergiert.

### Beispiel 5 b:

Diese Dispersion wird anschließend in drei Teilströme geteilt, unter Druck gesetzt und die Teilströme über eine Diamantdüse auf einen gemeinsamen Kollisionspunkt hin entspannt, wobei die Teilströme jeweils einen Winkel von 120° und eine Geschwindigkeit von 700 m·s⁻¹ aufweisen. Die so erhaltene Dispersion wird anschließend nochmals unter den gleichen Bedingungen vermahlen.

Der mittlere Partikeldurchmesser (Medianwert) der erhaltenen Dispersion weist einen mittels dynamischer Lichtstreuung bestimmten Wert von 82 nm auf.

### Beispiel 6: Herstellung eines Lackes

Es wird ein Lack mit der in Tabelle 2 gezeigten Zusammensetzung hergestellt. Dieser wird auf ein schwarz lackiertes Blech DT aufgespritzt, 24 Stunden bei Raumtemperatur und anschließend 2 Stunden bei 70°C getrocknet. Der Lack zeigt einen geringen Haze bei guter Kratzfestigkeit.

**Tabelle 2: Lack (Angaben in Gewichtsteilen [g])**

| | |
|---|---|
| Dispersion aus Beispiel 1 | 33 |
| Macrynal SM 565, 70% | 122 |
| Methoxypropylacetat | 0,5 |
| Butylacetat | 3 |
| Solvesso 100 | 4 |
| Xylol | 5,4 |

## Patentansprüche

1. Verfahren zur Herstellung einer Dispersion von oberflächenmodifizierten Siliciumdioxidpartikeln mit einem mittleren Partikeldurchmesser von höchstens 100 nm durch eine Hochdruckvermahlung einer Vordispersion enthaltend
a) 10 bis 50 Gew.-% oberflächenmodifizierte Siliciumdioxidpartikel, die
- wenigstens teilweise aggregiert sind,
- eine Methanolbenetzbarkeit von 25 bis 45 aufweisen
- über Si-O-Si-Bindungen mit der oberflächenmodifizierenden Komponente verbunden sind und auf ihrer Oberfläche noch reaktive Gruppen aufweisen,
b) wenigstens einen Glykolmonoether der allgemeinen Formel A
H₃C(CH₂)ₘ-O-(CH₂)ₙ-[O-(CH₂)ₒ]ₚ-OH (A)
mit
m = 0, 1, 2 oder 3,
n, o = 2, 3 oder 4,
p = 0 oder 1
c) wenigstens einen Carbonsäureester der allgemeinen Formel B
H₂ₓ₊₁Cₓ-O-CH₂-(CHR)-[O-CHR]_{y}-O-C(=O)-C_{z}H_{2z+1} (B)
mit
R = H, CH₃, C₂H₅, C₃H₇
x, z = 1, 2 oder 3,
y = 0 oder 1
d) wobei das molare Verhältnis A/B 10:90 bis 40:60 ist und m, n, o, p, x, y und z unabhängig voneinander sind, wobei
e) während der Hochdruckvermahlung die flüssige Phase der Vordispersion aus wenigstens einem Glykolmonoether der allgemeinen Formel A und wenigstens einem Carbonsäureester der allgemeinen Formel B besteht und
f) die Hochdruckvermahlung durchgeführt wird, indem man die Vordispersion in wenigstens zwei Teilströme aufteilt, diese unter einen Druck von 50 bis 500 MPa setzt, und über jeweils eine Düse auf einen gemeinsamen Kollisionspunkt hin entspannt.

2. Verfahren nach Anspruch 1, **dadurch gekennzeichnet, dass** die eingesetzten oberflächenmodifizierten Siliciumdioxidpartikel pyrogener Herkunft sind.

3. Verfahren nach den Ansprüchen 1 oder 2, **dadurch gekennzeichnet, dass** man H₃C(CH₂)₃-O-(CH₂)₂-OH einsetzt.

4. Verfahren nach den Ansprüchen 1 bis 3, **dadurch gekennzeichnet, dass** man H₃C-O-CH₂-CHCH₃-O-C(=O)-CH₃ einsetzt.

5. Dispersion von oberflächenmodifizierten Siliciumdioxidpartikeln mit einem mittleren Partikeldurchmesser von höchstens 100 nm, die reaktive Gruppen in Form von OH-Gruppen aufweisen, die mit den Bestandteilen der flüssigen Phase unter Bildung kovalenter, ionischer oder koordinativer Bindungen reagieren,
wobei die flüssige Phase aus
wenigstens einem Glykolmonoether der allgemeinen Formel H₃C(CH₂)ₘ-O-(CH₂)ₙ-[O-(CH₂)ₒ]ₚ-OH (A) mit m = 0,1,2 oder 3; n, o = 2,3 oder 4, p = 0 oder 1 und wenigstens einem Carbonsäureester der allgemeinen Formel H₂ₓ₊₁Cₓ-O-CH₂-(CHR)-[O-CHR]_{y}-O-C(=O)-C_{z}H_{2z+1} (B) mit R = H, CH₃, C₂H₅, C₃H₇; x,z = 1,2 oder 3, y = 0 oder 1 besteht,
erhältlich nach dem Verfahren gemäß der Ansprüche 1 bis 5.

6. Verfahren zur Herstellung von Granulaten oberflächenmodifizierter Siliciumdioxidpartikel, bei dem man die flüssige Phase der Dispersion gemäß Anspruch 5 abtrennt.

7. Verfahren nach Anspruch 6, **dadurch gekennzeichnet, dass** man oberflächenmodifizierte Siliciumdioxidpartikel mit einer BET-Oberfläche von 40 bis 200 m²/g und einer Methanolbenetzbarkeit von 30 bis 40 einsetzt, die durch Reaktion von pyrogen hergestellten Siliciumdioxidpartikeln mit Dimethyldichlorsilan erhalten werden.

8. Granulat von oberflächenmodifizierten Siliciumdioxidpartikel erhältlich nach dem Verfahren gemäß der Ansprüche 6 oder 7.

## Claims

1. Process for preparing a dispersion of surface-modified silicon dioxide particles having an average particle diameter of not more than 100 nm by high-pressure milling of a preliminary dispersion comprising
a) 10% to 50% by weight of surface-modified silicon dioxide particles which
- are at least partly aggregated,
- have a methanol wettability of 25 to 45 and
- are connected via Si-O-Si bonds to the surface-modifying component and still have reactive groups on their surface,
b) at least one glycol monoether of the general formula A
H₃C(CH₂)ₘ-O-(CH₂)ₙ-[O-(CH₂)ₒ]ₚ-OH (A)
where
m = 0, 1, 2 or 3,
n and o = 2, 3 or 4, and
p = 0 or 1,
c) at least one carboxylic ester of the general formula B
H₂ₓ₊₁Cₓ-O-CH₂-(CHR) - [O-CHR]_{y}-O-C(=O)-C_{z}H_{2z+1} (B)
where
R = H, CH₃, C₂H₅ or C₃H₇,
x and z = 1, 2 or 3, and
y = 0 or 1,
d) the molar ratio A/B being 10:90 to 40:60 and m, n, o, p, x, y and z being independent of one another, where
e) during the high-pressure milling, the liquid phase of the preliminary dispersion consists of at least one glycol monoether of the general formula A and at least one carboxylic ester of the general formula B, and
f) the high-pressure milling is carried out by dividing the preliminary dispersion into at least two substreams, which are pressurized at from 50 to 500 MPa and released via a respective nozzle towards a common collision point.

2. Process according to Claim 1, **characterized in that** the surface-modified silicon dioxide particles used are of pyrogenic origin.

3. Process according to Claim 1 or 2, **characterized in that** H₃C(CH₂)₃-O-(CH₂)₂-OH is used.

4. Process according to any of Claims 1 to 3, **characterized in that** H₃C-O-CH₂-CHCH₃-O-C(=O)-CH₃ is used.

5. Dispersion of surface-modified silicon dioxide particles having an average particle diameter of not more than 100 nm, which have reactive groups in the form of OH groups, which react with the constituents of the liquid phase, to form covalent, ionic or coordinative bonds, the liquid phase consisting of at least one glycol monoether of the general formula H₃C(CH₂)ₘ-O-(CH₂)ₙ-[O-(CH₂)ₒ]ₚ-OH (A) where m = 0, 1, 2 or 3; n and o = 2, 3 or 4, and p = 0 or 1, and of at least one carboxylic ester of the general formula H₂ₓ₊₁Cₓ-O-CH₂-(CHR)-[O-CHR]_{y}-O-C(=O)-C_{z}H_{2z+1} (B) where R = H, CH₃, C₂H₅ or C₃H₇; x and z = 1, 2 or 3, and y = 0 or 1, obtainable by the process according to any of Claims 1 to 5.

6. Process for producing granules of surface-modified silicon dioxide particles, in which the liquid phase of the dispersion according to Claim 5 is separated off.

7. Process according to Claim 6, **characterized in that** surface-modified silicon dioxide particles having a BET surface area of 40 to 200 m²/g and a methanol wettability of 30 to 40 are used which are obtained by reacting pyrogenically prepared silicon dioxide particles with dimethyldichlorosilane.

8. Granules of surface-modified silicon dioxide particle obtainable by the process according to either of Claims 6 and 7.

## Revendications

1. Procédé pour la préparation d'une dispersion de particules de dioxyde de silicium, modifiées en surface, présentant un diamètre moyen de particule d'au plus 100 nm, par un broyage haute pression d'une prédispersion contenant
a) 10 à 50% en poids de particules de dioxyde de silicium modifiées en surface, qui
- sont au moins partiellement agglomérées,
- présentent une mouillabilité par le méthanol de 25 à 45,
- sont reliées via des liaisons Si-O-Si au composant de modification de la surface et qui présentent encore des groupes réactifs en leur surface,
b) au moins un glycolmonoéther de formule générale A,
H₃C(CH₂)ₘ-O-(CH₂)ₙ,-[O-(CH₂)ₒ]ₚ-OH (A)
dans laquelle
m = 0, 1, 2 ou 3,
n, o = 2, 3 ou 4,
p = 0 ou 1
c) au moins un ester d'acide carboxylique de formule générale B,
H₂ₓ₊₁Cₓ-O-CH₂-(CHR)-[O-CHR]_{y}-O-C(=O)-C_{z}H_{2z+1} (B)
dans laquelle
R = H, CH₃, C₂H₅, C₃H₇
x, z = 1, 2 ou 3,
y = 0 ou 1
d) le rapport molaire A/B valant 10:90 à 40:60 et m, n, o, p, x, y et z étant indépendants les uns des autres,
e) pendant le broyage haute pression, la phase liquide de la prédispersion étant constituée par au moins un glycolmonoéther de formule générale A et par au moins un ester d'acide carboxylique de formule générale B et
f) le broyage haute pression étant réalisé en ce qu'on répartit la prédispersion en au moins deux flux partiels, on met ceux-ci sous une pression de 50 à 500 MPa et on les détend à chaque fois via une buse vers un point de collision commun.

2. Procédé selon la revendication 1, **caractérisé en ce que** les particules de dioxyde de silicium modifiées en surface utilisées sont d'origine pyrogène.

3. Procédé selon les revendications 1 ou 2, **caractérisé en ce qu'**on utilise du H₃C(CH₂)₃-O-(CH₂)₂-OH.

4. Procédé selon les revendications 1 à 3, **caractérisé en ce qu'**on utilise du H₃C-O-CH₂-CHCH₃-OC(=O)-CH₃.

5. Dispersion de particules de dioxyde de silicium, modifiées en surface, présentant un diamètre moyen de particule d'au plus 100 nm, qui présentent des groupes réactifs sous forme de groupes OH qui réagissent avec les constituants de la phase liquide avec formation de liaisons covalentes, ioniques ou de coordination, la phase liquide étant constituée par au moins un glycolmonoéther de formule générale H₃C(CH₂)ₘ-O-(CH₂)ₙ-[O-(CH₂)ₒ]ₚ-OH (A) dans laquelle m = 0, 1, 2 ou 3 ; n, o = 2, 3 ou 4, p = 0 ou 1 et par au moins un ester d'acide carboxylique de formule générale H₂ₓ₊₁Cₓ-O-CH₂-(CHR)-[O-CHR]_{y}-O-C(=O)-C_{z}H_{2z+1} (B) dans laquelle R = H, CH₃, C₂H₅, C₃H₇ ; x, z = 1, 2 ou 3, y = 0 ou 1, pouvant être obtenue selon le procédé selon les revendications 1 à 5.

6. Procédé pour la préparation de granulats de particules de dioxyde de silicium, modifiées en surface, dans lequel on sépare la phase liquide de la dispersion selon la revendication 5.

7. Procédé selon la revendication 6, **caractérisé en ce qu'**on utilise des particules de dioxyde de silicium modifiées en surface, présentant une surface BET de 40 à 200 m²/g et une mouillabilité par le méthanol de 30 à 40, qui sont obtenues par réaction de particules de dioxyde de silicium préparées par voie pyrogène avec du diméthyldichlorosilane.

8. Granulat de particule de dioxyde de silicium, modifiées en surface, pouvant être obtenues selon le procédé selon les revendications 6 ou 7.
